# FASCICULE DE BREVET EUROPEEN

(11) **EP 4 298 072 B1**
(45) Date de publication et mention de la délivrance du brevet: **29.04.2026**
(21) Numéro de dépôt: 22710653.1
(22) Date de dépôt: 17.02.2022
(51) Int. Cl.: C04B 2/12, C04B 7/43, F27B 1/00, F27B 1/16, F27D 5/00, F27B 7/20

(54) **ENSEMBLE DE CALCINATION POUR LA DECARBONATATION DES MATIERES CRUES ET PROCÉDÉ DE PRODUCTION DE CLINKER**
KALZINIERUNGSEINHEIT ZUR ENTKARBONISIERUNG VON ROHSTOFFEN UND KLINKERHERSTELLUNGSVERFAHREN
CALCINATION UNIT FOR DECARBONATING RAW MATERIALS, AND CLINKER PRODUCTION PROCESS

(30) Priorité: 23.02.2021 FR 2101761
(43) Date de publication de la demande: 03.01.2024
(73) Titulaire: Fives FCB, 59650 Villeneuve d'Ascq (FR)
(72) Inventeur: CHARMET, Jean-Michel, 59650 Villeneuve D'Ascq (FR)
(74) Mandataire: Novagraaf Group
(86) Numéro de dépôt international: PCT/FR2022/050291
(87) Numéro de publication internationale: WO 2022/180326

(56) Documents cités:
- WO-A1-2007/116084
- GB-A- 1 523 621
- JP-A- S59 128 237
- US-A- 5 816 795
- US-A1- 2017 260 089

## Description

### Domaine technique de l'invention

L'invention concerne un ensemble de calcination destiné à décarbonater des matières crues pour la production de clinker.

### Arrière-plan technique

La fabrication de ciment utilise pour sa plus grande part une matière cuite, le clinker, qui est produite à partir de minéraux dont le constituant essentiel est le carbonate de calcium.

Le clinker est produit à partir d'un mélange de matières minérales crues extraites de gisements naturels, parmi lesquels notamment l'argile, source d'aluminosilicates, et le calcaire, source de carbonate de calcium. Ces minéraux sont successivement mélangés, séchés, broyés, préchauffés, décarbonatés puis cuits et partiellement fondus dans un four rotatif jusqu'à une température d'environ 1500°C, puis le clinker ainsi formé est refroidi.

Le ciment est obtenu en broyant finement un mélange composé majoritairement de clinker.

Dans le procédé de fabrication du clinker, les matières crues sont calcinées dans un ensemble de calcination afin d'en extraire le dioxyde de carbone, c'est la décarbonatation.

La calcination nécessite un combustible, qui représente un coût de fonctionnement important. Afin de réduire ces coûts de fonctionnement, il est d'usage d'introduire des combustibles alternatifs. Ces derniers se distinguent des combustibles traditionnels à savoir, le charbon et les hydrocarbures. Un exemple de combustible alternatif est du pneu déchiqueté en lamelles.

Par leur nature et leurs dimensions, les combustibles alternatifs se consument parfois difficilement. Ceci ayant pour conséquence de nuire à la qualité du clinker, donc du ciment produit, et à la stabilité de fonctionnement de la ligne de cuisson. Les producteurs de ciment sont ainsi contraints de limiter les quantités utilisées des combustibles alternatifs dans la ligne de cuisson, afin d'éviter que ne se produisent ces phénomènes. Une alternative pour les producteurs de ciment est de déchiqueter les combustibles alternatifs avant utilisation, pour en réduire fortement les dimensions. Ces opérations sont coûteuses pour plusieurs raisons, parmi lesquelles, le caractère énergivore des déchiqueteurs et leur maintenance notamment.

Des fabricants de cimenterie ont tenté de résoudre ce problème. Parmi ces tentatives, l'une d'entre elle consiste à augmenter le temps de résidence du combustible alternatif dans l'objectif qu'il se consume complètement. Selon cette solution, un ensemble de calcination comporte une gaine principale dans laquelle circulent les matières crues et une gaine d'alimentation en combustible alternatif débouchant dans la gaine principale. La gaine d'alimentation comporte une série de marches descendantes sur lesquelles le combustible alternatif repose et se consume tandis qu'il se déplace dans la gaine d'alimentation en direction de la gaine principale. En fin de parcours, c'est-à-dire à la jonction avec la gaine principale, le combustible alternatif tombe dans la gaine principale où il est charrié par les gaz transportant les matières crues.

En dépit du fait que cette solution technique procure une certaine amélioration de la qualité du clinker, elle demeure perfectible.

Un inconvénient de cette solution technique réside dans le fait que le gaz comburant, ne fait que « lécher » le combustible alternatif par le dessus. La combustion est alors dégradée.

Un autre inconvénient réside dans le fait que malgré un temps de résidence plus long du combustible alternatif dans la gaine d'alimentation, du combustible alternatif non consumé est retrouvé dans les matières crues.

Le document US5816795 divulgue un ensemble de calcination apte à décarbonater des matières crues destinées à la production de clinker selon l'état de l'art actuel.

L'invention vise à remédier aux inconvénients précités.

### Résumé de l'invention

A cet effet, il est proposé en premier lieu un ensemble de calcination apte à décarbonater des matières crues destinées à la production de clinker, l'ensemble comprenant :
- un conduit principal dans lequel les matières crues circulent selon un premier sens de déplacement, les matières crues étant calcinées dans le conduit principal, le conduit principale comportant un renfoncement,
- un conduit d'alimentation de combustible solide débouchant sur le conduit principal par une sortie combustible, la sortie de combustible débouchant dans le renfoncement, le combustible solide se déplaçant selon un deuxième sens de déplacement,
- un dispositif de retenue situé dans le renfoncement du conduit principal et agencé en regard de la sortie de combustible solide de sorte que ledit combustible solide arrivant dans le conduit principal par la sortie combustible est envoyé vers ledit dispositif de retenue, ensemble dans lequel, le dispositif de retenue comporte des éléments de retenue et des passages séparant deux éléments de retenue adjacents.

L'ensemble de calcination comportant un dispositif de retenue ainsi agencé présente plusieurs avantages. Un premier avantage est que les gaz chauds transportant les matières crues dans le conduit principal, traversent le dispositif de retenue, et donc passent au travers du combustible solide, ce qui améliore significativement la combustion des combustibles solides. Un autre avantage est que le combustible solide se consume sur le dispositif de retenue, ce qui évite que du combustible solide soit retrouvé dans les matières crues et par la suite dans le clinker. Le taux d'utilisation des combustibles solides peut ainsi être augmenté tout en garantissant la qualité du clinker et la stabilité de la ligne de cuisson.

Diverses caractéristiques supplémentaires peuvent être prévues seules ou en combinaison :
- le conduit principal comporte une paroi latérale, ladite paroi latérale définissant une portion d'entrée présentant une section d'entrée, et une portion élargie présentant une section élargie supérieure à la section d'entrée et une portion de sortie présentant une section de sortie inférieure à la section élargie, le renfoncement étant située dans la portion élargie entre deux points s'étendant selon le premier sens de déplacement des matières crues ;
- le conduit principal comporte une portion rétrécie présentant une section rétrécie inférieure à la section d'entrée, la portion rétrécie se situant en amont de la portion élargie et en aval de la portion d'entrée, selon le premier sens de déplacement des matières crues ;
- le dispositif de retenue de combustible est apte à retenir du combustible solide dont l'une des dimensions est au moins égale à une valeur déterminée ;
- deux éléments de retenue adjacents sont espacés l'un de l'autre d'une distance comprise entre 30 et 70 millimètres ;
- le dispositif de retenue est apte à bloquer des combustibles solides dont au moins l'une des dimensions est supérieure à 50 millimètres ;
- les éléments de retenue sont agencés de sorte à définir un angle d'inclinaison compris entre 5° et 30°, ledit angle d'inclinaison étant mesuré entre un axe transversal sensiblement perpendiculaire au sens de déplacement des matières crues, et un axe d'extension passant par tous les éléments de retenue ;
- l'angle d'inclinaison est mesuré selon le sens horaire afin que les éléments de retenue soient orientés de sorte que les combustibles solides soient projetés vers le renfoncement ;
- l'ensemble de calcination comporte un conduit d'alimentation en air chaud débouchant dans le renfoncement par une sortie d'air chaud, ladite sortie d'air chaud étant agencée en regard du dispositif de retenue de sorte que l'air chaud traverse le dispositif de retenue ;
- l'ensemble de calcination comprend une paroi inférieure située dans le renfoncement et agencée en regard et en amont du dispositif de retenue selon le sens de déplacement des matières crues, l'ensemble de calcination comportant au moins un canal de nettoyage débouchant sur la paroi inférieure par au moins une sortie d'injection d'air, ladite sortie d'injection d'air permettant d'évacuer des combustibles solides collés sur ladite paroi inférieure.

Il est proposé en deuxième lieu une installation de production de clinker comprenant :
- un ensemble de préchauffage, dans lequel de la matière crue est préchauffée,
- un ensemble de calcination tel que précédemment décrit, dans lequel la matière crue préchauffée est au moins en partie décarbonatée,
- un four dans lequel la matière crue préchauffée et au moins en partie décarbonatée est cuite,
- un refroidisseur dans lequel la matière cuite du four est refroidie par de l'air de refroidissement

Il est proposé en troisième lieu un procédé de production de clinker au moyen d'une installation, telle que précédemment décrite, dans lequel, celui-ci comporte les opérations suivantes :
- injecter un combustible solide alternatif dans l'ensemble de calcination par le conduit d'alimentation de combustible solide, ledit combustible alternatif comprenant des particules de dimension supérieure à 50 millimètres, ci-après appelées particules de grande taille,
- retenir les particules de grande taille au moyen du dispositif de retenue,
- consumer les particules de grande taille sur le dispositif de retenue jusqu'à que leurs dimensions soient inférieures à 50 millimètres, lesdites particules passant alors dans les passages entre les éléments de retenue.

Diverses caractéristiques supplémentaires peuvent être prévues seules ou en combinaison :
- celui-ci comporte une opération d'injection d'air chaud dans le renfoncement par le conduit d'alimentation en air chaud ;
- l'air chaud provient du refroidissement du clinker dans le refroidisseur ;
- le procédé comporte une opération d'injection d'air comprimé par les canaux de nettoyage pour évacuer le combustible solide collé sur la paroi inférieure du renfoncement.

### Brève description des figures

D'autres caractéristiques et avantages de l'invention apparaitront au cours de la lecture de la description détaillée qui va suivre pour la compréhension de laquelle on se reportera au dessin annexé dans lequel :

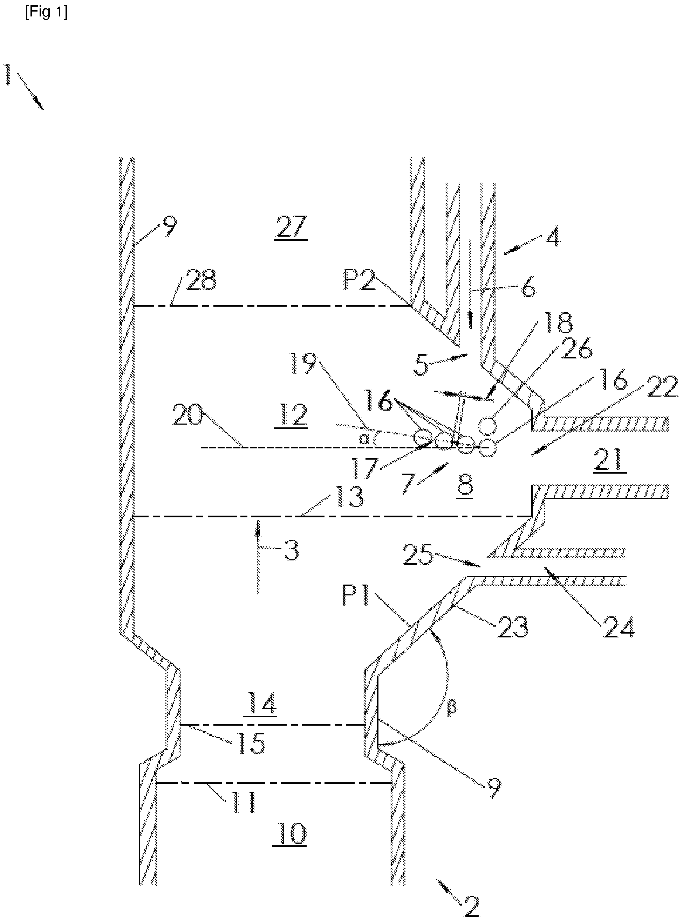

[Fig 1] la figure 1 est une représentation schématique d'une coupe d'un ensemble de calcination selon l'invention.

### Description détaillée de l'invention

Sur la figure 1 est représenté un ensemble 1 de calcination. L'ensemble 1 de calcination est apte à décarbonater des matières crues destinées à la production de clinker.

L'ensemble 1 de calcination comprend un conduit 2 principal. Dans ce conduit 2 principal, les matières crues, transportées par des gaz, circulent selon un premier sens de déplacement représenté par une première flèche 3. Les matières crues sont calcinées dans le conduit 2 principal.

L'ensemble 1 de calcination comprend un conduit 4 d'alimentation de combustible solide. Le conduit 4 d'alimentation de combustible solide débouche sur le conduit 2 principal par une sortie 5 de combustible. Dans le conduit 4 d'alimentation, le combustible solide se déplace selon un deuxième sens de déplacement, représenté par une deuxième flèche 6.

L'ensemble 1 de calcination comprend un dispositif 7 de retenue. Le dispositif 7 de retenue est situé dans le conduit 2 principal, c'est-à-dire dans le même conduit dans lequel circulent les gaz chauds sortant d'un four de cuisson. Le dispositif 7 de retenue est agencé en regard de la sortie 5 de combustible. Ainsi le combustible solide arrivant dans le conduit 2 principal par la sortie 5 de combustible, traverse le dispositif 7 de retenue.

L'ensemble 1 de calcination comportant un dispositif 7 de retenue ainsi agencé présente plusieurs avantages. Un premier avantage est que les gaz chauds transportant les matières crues dans le conduit 2 principal, traversent le dispositif 7 de retenue, et donc passent au travers du combustible solide, ce qui améliore significativement la combustion des combustibles solides. Un autre avantage est que le combustible solide se consume sur le dispositif 7 de retenue, ce qui évite que du combustible solide soit retrouvé dans les matières crues et par la suite dans le clinker. Le taux d'utilisation des combustibles solides peut ainsi être augmenté tout en garantissant la qualité du clinker et la stabilité de la ligne de cuisson.

Avantageusement, le conduit 2 principal comporte un renfoncement 8. La renfoncement 8 se présente sous la forme d'une portion creuse élargissant ponctuellement le conduit 2 principal. Le conduit 4 d'alimentation de combustible débouche dans le renfoncement 8 par la sortie 5 de combustible. Le dispositif 7 de retenue est agencé dans le renfoncement 8.

Un tel agencement permet de ne pas obstruer le conduit 2 principal tout en permettant aux gaz transportant les matières crues de traverser le dispositif 7 de retenue, et de ce fait, le combustible solide.

Avantageusement, le conduit 2 principal comporte une paroi 9 latérale. La paroi 9 latérale délimite sur sa périphérie, le conduit 2 principal. La paroi 9 latérale définit une portion 10 d'entrée ayant une section 11 d'entrée. La paroi 9 latérale définit aussi une portion 12 élargie ayant une section 13 élargie supérieure à la section 11 d'entrée. La portion 12 élargie s'étend entre deux points P1, P2 selon le premier sens de déplacement. Entre les deux points P1, P2, la section 13 élargie est supérieure à la section 11 d'entrée.

Il est entendu par « traverse le dispositif 7 de retenue » précédemment évoqué, le fait que le combustible alternatif est envoyé dans la portion 12 élargie en passant au préalable par le dispositif 7 de retenue.

Avantageusement, le conduit 2 principal comporte une portion 14 rétrécie ayant une section 15 rétrécie. La section 15 rétrécie est inférieure à la section 11 d'entrée. La portion 14 rétrécie se situe en amont de la portion 12 élargie selon le premier sens de déplacement. Les sections sont mesurées en unité de surface à savoir le mètre carré.

La portion 14 rétrécie ainsi agencée permet d'accélérer localement le flux des gaz transportant les matières crues. Cette accélération, suivie d'une détente due à la portion 12 élargie, permet de mettre en suspension le combustible alternatif dans les gaz transportant les matières crues.

La conduit 2 principal comporte une portion 27 de sortie située en aval de la portion 12 élargie selon le premier sens de déplacement. La portion 27 de sortie présente une section 28 de sortie inférieure à la section 13 élargie de la portion 12 élargie.

Dans le mode de réalisation représenté sur la figure 1, la portion 10 d'entrée située en amont de la portion 12 élargie selon le premier sens de déplacement présente une section 11 d'entrée différente de la section 28 de sortie de la portion 27 de sortie.

Avantageusement, le dispositif 7 de retenue comporte des éléments 16 de retenue. Les éléments 16 de retenue sont séparés les uns des autres par des passages 17. Ainsi, deux éléments 16 de retenue adjacents sont séparés par un passage 17. Deux éléments 16 de retenue adjacents sont avantageusement espacés l'un de l'autre d'une distance 18 comprise entre 30 et 70 millimètres, de préférence environ 50 millimètres.

Les gaz chauds transportant les matières crues dans le conduit 2 principal, traversent ainsi le dispositif 7 de retenue, et donc passent au travers du combustible solide, ce qui améliore significativement la combustion des combustibles solides.

Les éléments 16 de retenue sont avantageusement fabriqués dans un matériau réfractaire résistant aux températures élevées, typiquement supérieure à 800°C. A titre d'exemple non limitatif, un tel matériau réfractaire est du carbure de silicium, un alliage à base de nickel / chrome ou de l'inox réfractaire. Selon une variante de réalisation, les éléments 16 de retenue peuvent être fabriqués dans un matériau non réfractaire ayant une résistance inférieure aux hautes températures, dans ce cas, les éléments 16 de retenue sont refroidis au moyen d'un fluide caloporteur.

Les éléments de retenue sont avantageusement fabriqués dans un matériau résistant à la chaleur. Avantageusement, les éléments de retenue sont fabriqués en carbure de silicium.

Un tel dispositif 7 de retenue permet de retenir les combustibles solides susceptibles, de ne pas se consumer dans le conduit 2 principale.

Avantageusement, le dispositif 7 de retenue de combustible est apte à retenir du combustible solide dont l'une des dimensions est au moins égale à une valeur déterminée.

Avantageusement, le dispositif 7 de retenue, est apte à bloquer des combustibles dont au moins l'une des dimensions est supérieure à 50 millimètres.

Les combustibles solides ayant l'une au moins de leurs dimensions, supérieure à 50 millimètres sont susceptibles de ne pas se consumer intégralement en arrivant dans le conduit 2 principale, et donc de polluer le clinker. Un tel dispositif 7 de retenue, permet de piéger les combustibles solides ayant au moins une dimension supérieure à 50 millimètres. Ces combustibles solides piégés, se consument dans le dispositif 7 de retenue avant de passer au travers de ce dernier ou d'être entraîné par le flux de gaz transportant les matières crues, ce qui permet d'obtenir un clinker dénué de combustible solide non consumé.

Avantageusement, les éléments 16 de retenue s'étendent selon un axe 19 d'extension passant par tous les éléments 16 de retenue. L'axe 19 d'extension définit avec un axe 20 transversal sensiblement perpendiculaire au premier sens de déplacement, un angle α. L'angle α est compris entre 5° et 30°, de préférence entre 15° et 25°.

Un tel agencement permet d'empêcher que les combustibles solides arrivant à une certaine vitesse du conduit 4 d'alimentation ne rebondissent sur le dispositif 7 de retenue et soient éjectés vers le conduit 2 principal sans avoir été correctement consumés.

Avantageusement l'angle α est mesuré selon le sens horaire afin que les éléments 16 de retenue soient orientés en direction du renfoncement 8. Ainsi les combustibles solides sont projetés vers le renfoncement 8 et non vers le conduit 2 principal.

Ceci permet d'éviter que les combustibles solides soient éjectés vers le conduit 2 principal.

Avantageusement, le dispositif 7 de retenue comprend un élément latéral 26 de retenue. L'élément latéral 26 de retenue est agencée à une extrémité du dispositif 7 de retenue, ladite extrémité étant située du côté du renfoncement 8. L'élément latéral 26 de retenue empêche les combustibles solides de tomber en dehors du dispositif 7 de retenue.

Avantageusement, l'ensemble 1 de calcination comprend un conduit 21 d'alimentation en air chaud, ci-après dénommée conduit 21 d'air chaud. Le conduit 21 d'air chaud débouche dans le renfoncement 8 par une sortie 22 d'air chaud. La sortie 22 d'air chaud est avantageusement agencée en regard du dispositif 7 de retenue de sorte que l'air chaud traverse ledit dispositif 7 de retenue.

Cet agencement de la sortie 22 d'air chaud permet d'améliorer la combustion du combustible solide piégé dans le dispositif 7 de retenue. En effet, l'apport d'air chaud directement sur le dispositif 7 de retenue améliore les conditions de combustion du combustible solide.

Avantageusement, l'ensemble 1 de calcination comprend une paroi 23 inférieure située dans le renfoncement 8. La paroi 23 inférieure est agencée en regard et en amont du dispositif 7 de retenue selon le sens de déplacement des matières crues. La paroi 23 inférieure définit avec la paroi 9 latérale sensiblement parallèle à la première flèche 3 un angle β compris avantageusement entre 130° et 170°. L'angle β est d'environ 150°. L'angle β est mesuré selon le sens anti horaire en partant de la paroi 9 latérale. Un tel angle permet d'améliorer la mise en suspension du combustible alternatif dans le flux de gaz transportant les matières crues, tout en évitant que d'importantes quantités de combustible alternatif ne se collent sur la paroi 23 inférieure.

L'ensemble 1 de calcination comporte au moins un canal 24 de nettoyage. Le canal 24 de nettoyage débouche sur la paroi 23 inférieure par une sortie 25 d'injection d'air. La sortie 25 d'injection d'air permet avantageusement d'évacuer des combustibles solides collés sur la paroi 23 inférieure. En effet, des résidus de combustibles solides sont susceptibles de rester collés sur la paroi 23 inférieure. Ceci est particulièrement le cas lorsque les combustibles solides sont caoutchouteux.

L'invention concerne avantageusement un installation (non représentée sur les dessins) comprenant :
- un ensemble de préchauffage, dans lequel la matière crue est préchauffée,
- un ensemble 1 de calcination tel que précédemment décrit, dans lequel la matière crue préchauffée est au moins en partie décarbonatée ,
- un four dans lequel la matière crue préchauffée et au moins en partie décarbonatée, est cuite,
- un refroidisseur dans lequel la matière cuite du four est refroidie par de l'air de refroidissement.

L'installation comprend avantageusement, un dispositif de production d'air comprimé relié au canal 24 de nettoyage.

Dans ce qui suit, un procédé de production de clinker au moyen de l'installation précédemment évoquée, va être décrit.

Le procédé comporte une opération d'injection d'un combustible solide alternatif dans l'ensemble 1 calcination. Le combustible solide alternatif est introduit par le conduit 4 d'alimentation de combustible solide. Le combustible solide alternatif comprend des particules dont au moins une dimension est supérieure à 50 millimètres. Ces particules sont ci-après dénommées particules de grande taille.

Le procédé comprend une opération consistant à retenir les particules de grande taille au moyen du dispositif 7 de retenue.

Le procédé comporte une opération consistant à brûler les particules de grande taille sur le dispositif 7 de retenue jusqu'à ce que leurs dimensions soient inférieures à 50 millimètres, lesdites particules passant alors dans les passages 17 entre les éléments 16 de retenue.

Avantageusement le procédé comporte une opération d'injection d'air chaud dans le renfoncement 8 par le conduit 21 d'air chaud. Ceci permet de favoriser la consumation du combustible solide piégé dans le dispositif 7 de retenue.

Avantageusement, l'air chaud provient du refroidissement du clinker dans le refroidisseur.

Avantageusement, le procédé comporte une opération d'injection d'air comprimé dans le canal 24 de nettoyage. Ceci permet d'évacuer le combustible solide collé sur la paroi 23 inférieure du renfoncement 8.

## Revendications

1. Ensemble (1) de calcination apte à décarbonater des matières crues destinées à la production de clinker, l'ensemble (1) comprenant :
- un conduit (2) principal dans lequel les matières crues circulent selon un premier sens (3) de déplacement, les matières crues étant calcinées dans le conduit (2) principal, le conduit (2) principal comportant un renfoncement (8),
- un conduit (4) d'alimentation de combustible solide débouchant sur le conduit (2) principal par une sortie (5) de combustible, la sortie (5) de combustible débouchant dans le renfocement (8), le combustible solide se déplaçant selon un deuxième sens de déplacement,
- un dispositif (7) de retenue situé dans le renfoncement (8) du conduit (2) principal et agencé en regard de la sortie (5) de combustible solide de sorte que ledit combustible solide arrivant dans le conduit (2) principal par la sortie (5) de combustible est envoyé vers ledit dispositif (7) de retenue,
ensemble dans lequel, le dispositif (7) de retenue comporte des éléments (16) de retenue et des passages (17) séparant deux éléments (16) de retenue adjacents.

2. Ensemble (1) selon la revendication 1 dans lequel, le conduit (2) principal comporte une paroi (9) latérale, ladite paroi (9) latérale définissant une portion (10) d'entrée présentant une section (11) d'entrée, et une portion (12) élargie présentant une section (13) élargie supérieure à la section (11) d'entrée et une portion (27) de sortie présentant une section (28) de sortie inférieure à la section (13) élargie, le renfoncement (8) étant située dans la portion (12) élargie entre deux points (P1, P2) s'étendant selon le premier sens de déplacement des matières crues.

3. Ensemble selon la revendication 2 dans lequel le conduit (2) principal comporte une portion (14) rétrécie présentant une section (15) rétrécie inférieure à la section (11) d'entrée, la portion (14) rétrécie se situant en amont de la portion (12) élargie et en aval de la portion (11) d'entrée, selon le premier sens (3) de déplacement des matières crues.

4. Ensemble (1) selon l'une quelconque des revendications précédentes dans lequel, le dispositif (7) de retenue de combustible est apte à retenir du combustible solide dont l'une des dimensions est au moins égale à une valeur déterminée.

5. Ensemble (1) selon l'une quelconque des revendications précédentes dans lequel, deux éléments (16) de retenue adjacents sont espacés l'un de l'autre d'une distance (18) comprise entre 30 et 70 millimètres.

6. Ensemble (1) selon l'une quelconque des revendications précédentes dans lequel, le dispositif (7) de retenue est apte à bloquer des combustibles solides dont au moins l'une des dimensions est supérieure à 50 millimètres.

7. Ensemble (1) selon l'une quelconque des revendications 5 ou 6 dans lequel, les éléments (16) de retenue sont agencés de sorte à définir un angle (α) d'inclinaison compris entre 5° et 30°, ledit angle (α) d'inclinaison étant mesuré entre un axe (20) transversal sensiblement perpendiculaire au sens de déplacement des matières crues, et un axe (19) d'extension passant par tous les éléments (16) de retenue.

8. Ensemble (1) selon la revendication 7 dans lequel l'angle (α) d'inclinaison est mesuré selon le sens horaire afin que les éléments (16) de retenue soient orientés de sorte que les combustibles solides soient projetés vers le renfoncement (8).

9. Ensemble (1) selon la revendication 2 ou l'une quelconque des revendications 3 à 8 dépendantes de la revendication 2, dans lequel, celui-ci comporte un conduit (21) d'alimentation en air chaud débouchant dans le renfoncement (8) par une sortie (22) d'air chaud, ladite sortie (22) d'air chaud étant agencée en regard du dispositif (7) de retenue de sorte que l'air chaud traverse le dispositif (7) de retenue.

10. Ensemble (1) selon la revendication 2 ou l'une quelconque des revendications 3 à 9 dépendantes de la revendication 2 dans lequel, celui-ci comprend une paroi (23) inférieure située dans le renfoncement (8) et agencée en regard et en amont du dispositif (7) de retenue selon le sens de déplacement des matières crues, l'ensemble (1) de calcination comportant au moins un canal (24) de nettoyage débouchant sur la paroi (23) inférieure par au moins une sortie (25) d'injection d'air, ladite sortie (25) d'injection d'air permettant d'évacuer des combustibles solides collés sur ladite paroi (23) inférieure.

11. Installation de production de clinker comprenant :
- un ensemble de préchauffage, dans lequel de la matière crue est préchauffée,
- un ensemble (1) de calcination selon l'une quelconque des revendications 1 à 10, dans lequel la matière crue préchauffée est au moins en partie décarbonatée,
- un four dans lequel la matière crue préchauffée et au moins en partie décarbonatée est cuite,
- un refroidisseur dans lequel la matière cuite du four est refroidie par de l'air de refroidissement.

12. Procédé de production de clinker au moyen d'une installation selon la revendication 11 dans lequel, celui-ci comporte les opérations suivantes :
- injecter un combustible solide alternatif dans l'ensemble (1) de calcination par le conduit (4) d'alimentation de combustible solide, ledit combustible alternatif comprenant des particules de dimension supérieure à 50 millimètres, ci-après appelées particules de grande taille,
- retenir les particules de grande taille au moyen du dispositif (7) de retenue,
- consumer les particules de grande taille sur le dispositif (7) de retenue jusqu'à que leurs dimensions soient inférieures à 50 millimètres, lesdites particules passant alors dans les passages (17) entre les éléments (16) de retenue.

13. Procédé de production de clinker selon la revendication 12 au moyen de l'installation comprenant un ensemble (1) de calcination selon la revendication 9 seule ou combinée avec la revendication 10, dans lequel celui-ci comporte une opération d'injection d'air chaud dans le renfoncement (8) par le conduit (21) d'alimentation en air chaud.

14. Procédé de production de clinker selon la revendication 13 dans lequel l'air chaud provient du refroidissement du clinker dans le refroidisseur.

15. Procédé de production de clinker selon l'une quelconque des revendications 12 à 14 au moyen de l'installation comprenant un ensemble (1) de calcination selon la revendication 10 dans lequel, celui-ci comporte une opération d'injection d'air comprimé par les canaux (24) de nettoyage pour évacuer le combustible solide collé sur la paroi (23) inférieure du renfoncement (8).

## Patentansprüche

1. Kalzinierungseinheit (1), die geeignet ist, Rohmaterialien zu entkarbonisieren, die für die Klinkerherstellung vorgesehen sind, die Einheit (1) umfassend:
- eine Hauptleitung (2), in der die Rohmaterialien gemäß einer ersten Bewegungsrichtung (3) zirkulieren, wobei die Rohmaterialien in der Hauptleitung (2) kalziniert werden, wobei die Hauptleitung (2) eine Vertiefung (8) vorweist,
- eine Festbrennstoffzufuhrleitung (4), die in die Hauptleitung (2) über einen Brennstoffauslass (5) mündet, wobei der Brennstoffauslass (5) in die Vertiefung (8) mündet, wobei sich der Festbrennstoff in einer zweiten Bewegungsrichtung bewegt,
- eine Rückhaltevorrichtung (7), die in der Vertiefung (8) des Hauptkanals (2) gelegen und gegenüber dem Festbrennstoffauslass (5) angeordnet ist, sodass der Festbrennstoff, der in der Hauptleitung (2) durch den Brennstoffauslass (5) ankommt, zu der Rückhaltevorrichtung (7) geleitet wird,
Einheit, bei der die Rückhaltevorrichtung (7) Rückhalteelemente (16) und Durchgänge (17), die zwei benachbarte Rückhalteelemente (16) trennen, vorweist.

2. Einheit (1) nach Anspruch 1, wobei die Hauptleitung (2) eine Seitenwand (9) vorweist, wobei die Seitenwand (9) einen Eingangsabschnitt (10), der einen Eingangsquerschnitt (11) und einen erweiterten Abschnitt (12) aufweist, der einen erweiterten Querschnitt (13) aufweist, der größer als der Eingangsquerschnitt (11) ist, und einen Ausgangsabschnitt (27), der einen Ausgangsquerschnitt (28) aufweist, der kleiner als der erweiterte Querschnitt (13) ist, definiert, wobei die Vertiefung (8), die in dem erweiterten Abschnitt (12) zwischen zwei Punkten (P1, P2), die sich in der ersten Bewegungsrichtung der Rohmaterialien erstrecken, gelegen ist.

3. Einheit nach Anspruch 2, wobei die Hauptleitung (2) einen verengten Abschnitt (14) vorweist, der einen verengten Querschnitt (15) aufweist, der kleiner als der Eingangsquerschnitt (11) ist, wobei sich der verengte Abschnitt (14) stromaufwärtig des erweiterten Abschnitts (12) und stromabwärtig des Eingangsabschnitts (11) befindet, gemäß der ersten Bewegungsrichtung (3) der Rohstoffe.

4. Einheit (1) nach einem der vorstehenden Ansprüche, wobei die Rückhaltevorrichtung (7) für Brennstoff zum Rückhalten von Festbrennstoff geeignet ist, wobei eine der Abmessungen mindestens gleich einem bestimmten Wert ist.

5. Einheit (1) nach einem der vorstehenden Ansprüche, wobei zwei benachbarte Rückhalteelemente (16) voneinander um einen Abstand (18), der zwischen 30 und 70 Millimeter liegt, beabstandet sind.

6. Einheit (1) nach einem der vorstehenden Ansprüche, wobei die Rückhaltevorrichtung (7) zum Blockieren von festen Brennstoffen geeignet ist, wobei mindestens eine der Abmessungen größer als 50 Millimeter ist.

7. Einheit (1) nach einem der Ansprüche 5 oder 6, wobei die Rückhalteelemente (16) angeordnet sind, sodass sie einen Neigungswinkel (α) zwischen 5° und 30° definieren, wobei der Neigungswinkel (α) zwischen einer Querachse (20), die im Wesentlichen senkrecht zu der Bewegungsrichtung der Rohmaterialien ist, und einer Erstreckungsachse (19), die durch alle Rückhalteelemente (16) verläuft, gemessen wird.

8. Einheit (1) nach Anspruch 7, wobei der Neigungswinkel (α) im Uhrzeigersinn gemessen wird, damit die Rückhalteelement (16) ausgerichtet sind, sodass die Festbrennstoffe zu der Vertiefung (8) geschleudert werden.

9. Einheit (1) nach Anspruch 2 oder einem der Ansprüche 3 bis 8, die von Anspruch 2 abhängen, wobei diese eine Heißluftzufuhrleitung (21) vorweist, die in die Vertiefung (8) durch einen Heißluftauslass (22) mündet, wobei der Heißluftauslass (22) gegenüber der Rückhaltevorrichtung (7) angeordnet ist, sodass die Heißluft die Rückhaltevorrichtung (7) durchströmt.

10. Einheit (1) nach Anspruch 2 oder einem der Ansprüche 3 bis 9, die von Anspruch 2 abhängen, wobei diese eine untere Wand (23) umfasst, die in der Vertiefung (8) gelegen und gegenüberliegend und stromaufwärtig der Rückhaltevorrichtung (7) gemäß der Bewegungsrichtung der Rohmaterialien angeordnet ist, wobei die Kalzinierungseinheit (1) mindestens einen Reinigungskanal (24) vorweist, der auf die untere Wand (23) durch mindestens einen Lufteinspritzauslass (25) mündet, wobei der Lufteinspritzauslass (25) ermöglicht, Festbrennstoffe abzuführen, die an der unteren Wand (23) haften.

11. Klinkerherstellungsanlage, umfassend:
- eine Vorheizeinheit, in der das Rohmaterial vorerhitzt wird,
- eine Kalzinierungseinheit (1) nach einem der Ansprüche 1 bis 10, wobei das vorerhitzte Rohmaterial mindestens teilweise entkarbonisiert ist,
- einen Ofen, in dem das vorerhitzte und mindestens teilweise entkarbonisierte Rohmaterial gebrannt wird,
- einen Kühler, in dem das gebrannte Material aus dem Ofen durch Kühlluft gekühlt wird.

12. Verfahren zum Herstellen von Klinker mittels einer Anlage nach Anspruch 11, wobei dieses die folgenden Verfahrensschritte vorweist:
- Einspritzen eines alternativen Festbrennstoffs in die Kalzinierungseinheit (1) durch die Festbrennstoffzufuhrleitung (4), der alternative Brennstoff umfassend Partikel mit einer Abmessung von größer als 50 Millimeter, nachstehend als großformatige Partikel bezeichnet,
- Rückhalten der Partikel großer Größe mittels der Rückhaltevorrichtung (7),
- Verbrauchen der Partikel großer Größe an der Rückhaltevorrichtung (7), bis ihre Abmessungen kleiner als 50 Millimeter sind, wobei die Partikel dann durch die Durchgänge (17) zwischen den Rückhalteelementen (16) hindurchtreten.

13. Verfahren zum Herstellen von Klinker nach Anspruch 12 mittels der Anlage, umfassend eine Kalzinierungseinheit (1) nach Anspruch 9 allein oder in Kombination mit Anspruch 10, wobei dieses einen Vorgang des Einspritzens von Heißluft in die Vertiefung (8) durch die Heißluftzufuhrleitung (21) umfasst.

14. Verfahren zum Herstellen von Klinker nach Anspruch 13, wobei die Heißluft aus der Kühlung des Klinkers in dem Kühler stammt.

15. Verfahren zum Herstellen von Klinker nach einem der Ansprüche 12 bis 14 mittels der Anlage, umfassend eine Kalzinierungseinheit (1) nach Anspruch 10, wobei dieses einen Vorgang des Einspritzens von Druckluft durch die Reinigungskanäle (24) zum Abführen des Festbrennstoffs, der an der unteren Wand (23) der Vertiefung (8) haftet, vorweist.

## Claims

1. Calcination assembly (1) suitable for decarbonating raw materials intended for the production of clinker, the assembly (1) comprising:
- a main duct (2) in which the raw materials circulate in a first movement direction (3), the raw materials being calcined in the main duct (2), the main duct (2) having a recess (8),
- a solid-fuel feed duct (4) opening into the main duct (2) via a fuel outlet (5), the fuel outlet (5) opening into the recess (8), the solid fuel moving in a second movement direction,
- a retaining device (7) located in the recess (8) of the main duct (2) and arranged opposite the solid-fuel outlet (5) so that said solid fuel entering the main duct (2) via the fuel outlet (5) is sent toward said retaining device (7),
wherein the retaining device (7) has retaining elements (16) and passages (17) separating two adjacent retaining elements (16).

2. Assembly (1) according to claim 1, wherein the main duct (2) has a side wall (9), said side wall (9) defining an inlet portion (10) with an inlet cross section (11) and a widened portion (12) with a widened cross section (13) larger than the inlet cross section (11) and an outlet portion (27) with an outlet cross section (28) smaller than the widened cross section (13), the recess (8) being located in the widened portion (12) between two points (P1, P2) extending in the first movement direction of the raw materials.

3. Assembly according to claim 2, wherein the main duct (2) has a narrowed portion (14) with a narrowed cross section (15) smaller than the inlet cross section (11), the narrowed portion (14) being located upstream of the widened portion (12) and downstream of the inlet portion (11) in the first movement direction (3) of the raw materials.

4. Assembly (1) according to any of the preceding claims, wherein the fuel retaining device (7) is suitable for retaining solid fuel, one of the dimensions of which is at least equal to a determined value.

5. Assembly (1) according to any of the preceding claims, wherein two adjacent retaining elements (16) are spaced apart by a distance (18) of between 30 and 70 millimeters.

6. Assembly (1) according to any of the preceding claims, wherein the retaining device (7) is suitable for immobilizing solid fuels, at least one of the dimensions of which is greater than 50 millimeters.

7. Assembly (1) according to either of claims 5 and 6, wherein the retaining elements (16) are arranged so as to define an inclination angle (α) of between 5° and 30°, said inclination angle (α) being measured between a transverse axis (20) substantially perpendicular to the movement direction of the raw materials and an extension axis (19) passing through all the retaining elements (16).

8. Assembly (1) according to claim 7, wherein the inclination angle (α) is measured clockwise in order for the retaining elements (16) to be oriented so that the solid fuels are projected toward the recess (8).

9. Assembly (1) according to claim 2 or any of claims 3 to 8 when dependent on claim 2, wherein the assembly has a hot-air feed duct (21) opening into the recess (8) via a hot-air outlet (22), said hot-air outlet (22) being arranged opposite the retaining device (7) so that the hot air passes through the retaining device (7).

10. Assembly (1) according to claim 2 or any of claims 3 to 9 when dependent on claim 2, wherein the assembly comprises a lower wall (23) located in the recess (8) and arranged opposite and upstream of the retaining device (7) in the movement direction of the raw materials, the calcination assembly (1) having at least one cleaning channel (24) opening onto the lower wall (23) via at least one air injection outlet (25), said air injection outlet (25) allowing solid fuels stuck to said lower wall (23) to be removed.

11. Facility for the production of clinker, comprising:
- a preheating assembly, in which raw material is preheated,
- a calcination assembly (1) according to any of claims 1 to 10, in which the preheated raw material is at least partially decarbonated,
- a kiln in which the preheated and at least partially decarbonated raw material is fired,
- a cooler in which the fired material from the kiln is cooled by cooling air.

12. Process for the production of clinker by means of a facility according to claim 11, wherein the method has the following operations:
- injecting an alternative solid fuel into the calcination assembly (1) via the solid-fuel feed duct (4), said alternative fuel comprising particles larger than 50 millimeters, hereinafter referred to as large particles,
- retaining the large particles by means of the retaining device (7),
- burning the large particles on the retaining device (7) until their dimensions are less than 50 millimeters, said particles then passing through the passages (17) between the retaining elements (16).

13. Process for the production of clinker according to claim 12 by means of the facility comprising a calcination assembly (1) according to claim 9 alone or in combination with claim 10, wherein the method has an operation of injecting hot air into the recess (8) via the hot-air feed duct (21).

14. Process for the production of clinker according to claim 13, wherein the hot air comes from the cooling of the clinker in the cooler.

15. Process for the production of clinker according to any of claims 12 to 14 by means of the facility comprising a calcination assembly (1) according to claim 10, wherein the method has an operation of injecting compressed air via the cleaning channels (24) to remove the solid fuel stuck to the lower wall (23) of the recess (8).
